# EUROPÄISCHE PATENTSCHRIFT

(11) **EP 0 685 098 B1**
(45) Veröffentlichungstag und Bekanntmachung des Hinweises auf die Patenterteilung: **25.09.1996**
(21) Anmeldenummer: 94905093.4
(22) Anmeldetag: 20.01.1994
(51) Int. Cl.: G09B 25/02, G09B 23/18

(54) **FÜR DEMONSTRATIONS- UND/ODER SCHULUNGSZWECKE VERWENDBARES FUNKTIONSELEMENT**
FUNCTIONAL COMPONENT USABLE DOR DEMONSTRATION AND/OR TRAINING PURPOSES
ELEMENT FONCTIONNEL UTILISABLE POUR LA DEMONSTRATION ET/OU L'ENSEIGNEMENT

(30) Priorität: 18.02.1993 DE 9302385 U
(43) Veröffentlichungstag der Anmeldung: 06.12.1995
(73) Patentinhaber: Festo KG, D-73734 Esslingen (DE)
(72) Erfinder: SIGEL, Albert, D-73235 Weilheim (DE)
(74) Vertreter: Abel, Martin, Dipl.-Ing.
(86) Internationale Anmeldenummer: EP9400131
(87) Internationale Veröffentlichungsnummer: WO9419787

(56) Entgegenhaltungen:
- DE-U- 9 115 943
- GB-A- 1 599 743
- US-A- 4 650 425
- US-A- 4 826 438
- IBM TECHNICAL DISCLOSURE BULLETIN. Bd. 32, Nr. 3B , August 1989 , NEW YORK US Seiten 137 - 138 'Self-retaining or removable spacer for transistor outline component package'
- Seiten 137 - 138 'Self-retaining or removable spacer for transistor outline component package'

## Beschreibung

Die Erfindung betrifft ein für Demonstrations- und/oder Schulungszwecke verwendbares Funktionselement gemäß dem Oberbegriff des Anspruches 1.

Um das Verständnis einzelner Bauelemente oder auch ganzer Schaltungen zu erleichtern, ist es insbesondere auf den Gebieten der Pneumatik, Hydraulik und Elektronik üblich, praktische Aufbauten heranzuziehen. Im Falle der aus der DE-GM 75 07 762 bekannten Anordnung wird ein plattenartiges Tragteil verwendet, das eine Vielzahl von in einem Raster angeordneten Bohrungen aufweist, in die sich die einzelnen Funktionselemente einstecken lassen. Jedes Funktionselement enthält eine pneumatische, hydraulische, elektrische oder elektronische Ausrüstung, beispielsweise Ventile, Arbeitszylinder, Manometer, Anschlußstutzen für elektrische oder pneumatische Leitungen, elektronische Steuerung usw. Die Funktionselemente können einem Schaltplan gemäß montiert und anschließend in der erforderlichen Weise fluidisch und/oder elektrisch miteinander verknüpft werden.

Bei Anordnungen der eingangs genannten Art, wie sie in etwa aus der DE-U-9115943 oder der US-A-4 650 425 hervorgehen, erfolgt die Befestigung der Funktionselemente an plattenförmigen Tragteilen, die mit Befestigungsvertiefungen ausgestattet sind. Ein von einem Nutenstein gebildetes Spannelement wird in eine Befestigungsvertiefung eingeführt und bis zum Anschlag verdreht, so daß beim anschließenden Weiterdrehen eines mit dem Spannelement zusammenarbeitenden Gewindeteils ein Spannvorgang ausgelöst wird.

Bei der Befestigung eines Funktionselements an dem Tragteil ist es erforderlich, das Funktionselement mit einer Hand so lange in der gewünschten Position zu halten, bis der Spannvorgang beendet ist. Dies insbesondere bei geneigt aufgestellten Tragteilen. Sind die Funktionselemente im Betrieb dynamischen Belastungen ausgesetzt, kann es ferner geschehen, daß die Spannkraft etwas nachlässt und die Funktionselemente verrutschen.

Es ist die Aufgabe der vorliegenden Erfindung, ein Funktionselement der eingangs genannten Art zu schaffen, das bei einfacher Handhabung und auch bei dynamischer Belastung und sicherer Befestigungsmöglichkeit einen flexibleren Aufbau vorzuführender Anordnungen gestattet.

Diese Aufgabe wird gelöst, durch die kennzeichnenden Merkmale des Anspruches 1.

Das Funktionselement ist nun so ausgelegt, daß es an einem mit mindestens einer nutartigen Befestigungsvertiefung ausgestatteten Tragteil sicher lösbar festlegbar ist. Tragteile dieser Art sind als solche bekannt, beispielsweise aus der DE-OS 40 10 840. Es kann sich dabei um ein stranggepreßtes plattenartiges Bauteil handeln, das mit mehreren linearen, parallel und mit Abstand nebeneinander verlaufenden Befestigungsvertiefungen ausgestattet ist, wobei das Funktionselement sich in einer beliebigen der vorhandenen Befestigungsvertiefungen lösbar verankern läßt. Als Befestigungseinrichtung des erfindungsgemäßen Funktionselements ist eine Spanneinrichtung vorgesehen, die ein nach unten vorspringendes Spannelement aufweist, das bei in Montagestellung befindlichem Funktionselement in die ausgewählte Befestigungsvertiefung eingreift. In seiner Sperrstellung hintergreift das Spannelement mit einem Spannkopf einen Haltevorsprung der Befestigungsvertiefung, so daß ein Abheben des Funktionselementes von der Montagefläche verhindert wird. Der feste Halt wird dadurch erzielt, daß der Spannkopf unter Beibehaltung der Sperrstellung gegen den Haltevorsprung vorgespannt wird. Die Aktivierung des Mechanismus sowohl im Spannsinne als auch im Lösesinne erfolgt auf einfache Weise durch bloßes Drehen eines Betätigungselements, das mit dem Spannelement in Gewindeverbindung steht. Ein Werkzeug wird in der Regel nicht benötigt, die Kraft der menschlichen Hand reicht zur Betätigung aus. Von besonderem Vorteil ist, daß sich das Funktionselement stufenlos in jeder beliebigen Position entlang der jeweiligen Befestigungsvertiefung anordnen und festklemmen läßt. Das mindestens eine Zentrierelement, das in der Montagestellung in die zugeordnete Befestigungsvertiefung eintaucht, trägt zur exakten Positionierung des Funktionselementes bezüglich des Tragteils bei. Es verhindert ein Verrutschen des Funktionselementes so daß selbst bei dynamischer Belastung stets ein sicherer Halt an dem Tragteil gewährleistet ist. Mit erfindungsgemäßen Funktionselementen lassen sich auch komplexe Schaltungen äußerst kompakt und platzsparend auf einem Tragteil installieren.

Vorteilhafte Weiterbildungen der Erfindung sind in den Unteransprüchen aufgeführt.

Als Spannelement ist zweckmäßigerweise eine sogenannte Hammerschraube vorgesehen, die im Handel erhältlich ist. Ihr Kopf bildet dann den Spannkopf.

Nachfolgend wird die Erfindung anhand der beliegenden Zeichnung näher erläutert. In dieser zeigen:

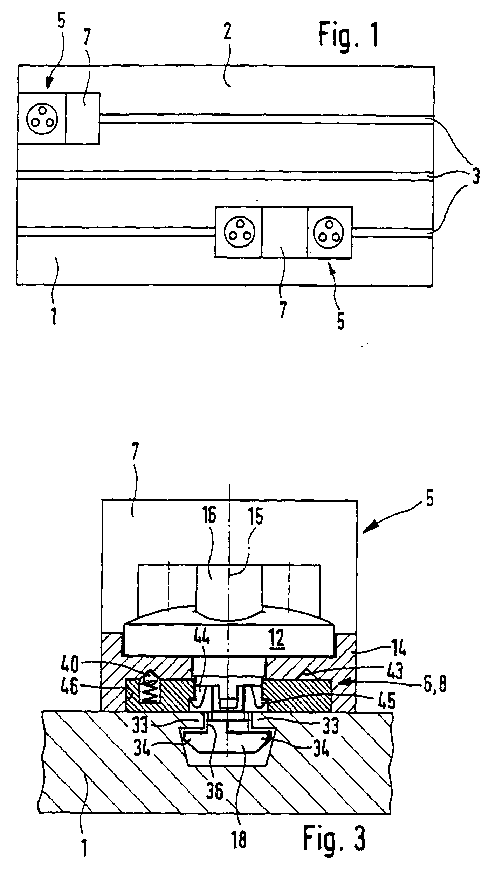

- Figur 1: ein insbesondere plattenartiges Tragteil mit Blick auf die Montagefläche, an der zwei Funktionselemente festgelegt sind.
- Figur 2: eine perspektivische Explosionsdarstellung einer bevorzugten Ausführungsform des Funktionselementes und einen Ausschnitt des zugehörigen Tragteils, wobei der Spannkopf des Spannelements eine der Freigabestellung entsprechende Position einnimmt und wobei die einzelnen Bestandteile stark vereinfacht wiedergegeben werden, und
- Figur 3: einen Querschnitt durch das Funktionselement aus Figur 2 gemäß Schnittlinie III-III in an das Tragteil angesetzter Montagestellung des Funktionselements gesehen, wobei der Spannkopf eine das Abheben vom Tragteil verhindernde Sperrstellung einnimmt.

Man erkennt in den Figuren ein bevorzugt plattenähnlich ausgebildetes Tragteil 1, dessen eine größere Plattenfläche eine im wesentlichen ebene Montagefläche 2 bildet. In dem Tragteil 1 sind mehrere nutartige Befestigungsvertiefungen 3 ausgebildet, die bevorzugt lineare Erstreckung besitzen, und die parallel mit Abstand zueinander angeordnet sind. Die Befestigungsvertiefungen 3 sind längsseits zur Montagefläche 2 hin offen. Bevorzugt münden sie auch zu zwei einander entgegengesetzten Stirnseiten des Tragteils 1 aus, so daß es sich bei letzterem um ein stranggepreßtes Profilteil handeln kann.

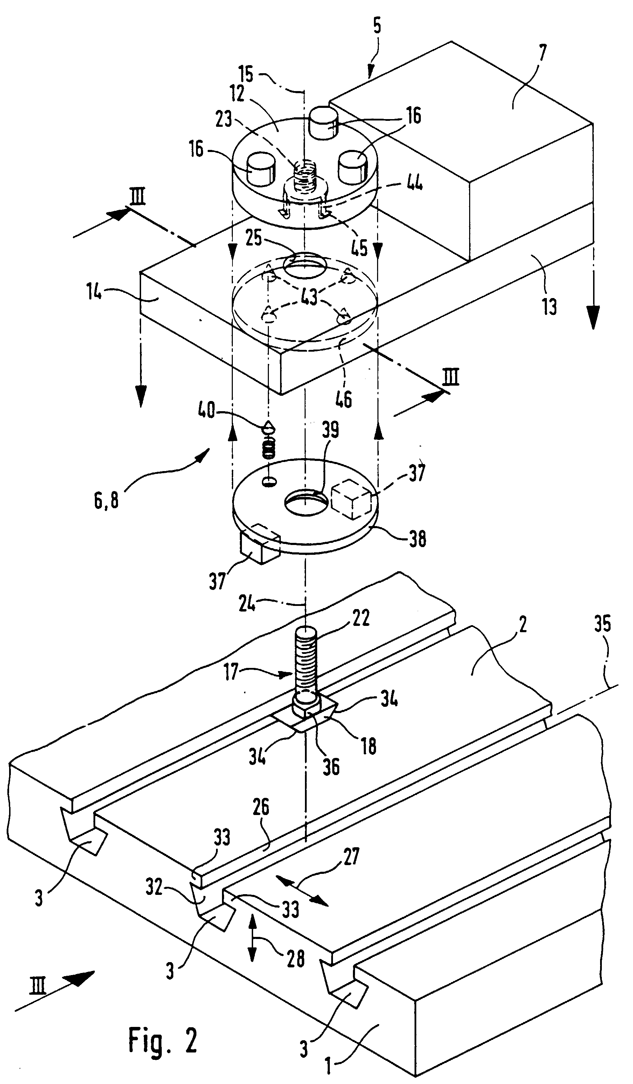

An die Montagefläche 2 sind Funktionselemente 5 ansetzbar, die sich mittels einer in Figuren 2 und 3 näher illustrierten Befestigungseinrichtung 6 in einer oder mehreren Befestigungsvertiefungen 3 lösbar verankern lassen. Die Funktionselemente 5 sind mit nicht im Detail dargestellten Funktionseinheiten 7 bestückt, die insbesondere pneumatischer und//oder hydraulischer und/oder elektrischer und/oder elektronischer und/oder optischer Art sind. Es kann sich beispielsweise um Einzelanordnungen oder Kombinationen von Ventilen, Arbeitszylindern, elektronischen Steuerungen, Manometern, Anschlußstutzen für elektrische oder fluidische Leitungen usw. handeln. Die an der Montagefläche 2 installierten Funktionselemente 5 lassen sich auf nicht näher dargestellte Weise miteinander verknüpfen, so daß Schaltpläne nachgebaut werden können, um zu Schulungszwecken eine praktische Verständigungshilfe zu leisten. Man kann auch im kleinen komplette Maschinen oder Anlagen aufbauen, um die bestmögliche Zuordnung oder Verknüpfung zu erhalten, bevor man eine entsprechende Anlage real konzipiert.

Die Anordnung der Funktionselemente 5 an dem Tragteil 1 ist äußerst flexibel, da sie sich an beliebiger Stelle längs der Befestigungsvertiefungen 3 lösbar anordnen lassen. Man ist somit nicht auf bestimmte Rastermaße festgelegt.

Es ist vorgesehen, die Befestigungseinrichtung 6 als Spanneinrichtung 8 auszubilden, die sich durch Drehen eines Betätigungselements 12 aktivieren läßt. Der bevorzugte Aufbau einer derartigen Spanneinrichtung 8 geht aus Figuren 2 und 3 hervor.

Das gezeigte Funktionselement 5 verfügt über einen Grundkörper 13, der die erwähnte Funktionseinheit 7 trägt. Letztere kann insbesondere auswechselbar an dem Grundkörper 13 angeordnet sein. Die Spanneinrichtung 8 wird von dem Grundkörper 13 getragen und befindet sich vorzugsweise im Bereich eines plattenförmigen Abschnittes 14 desselben. Sämtliche Bestandteile der Spanneinrichtung 8 sind also stets am Funktionselement 5 angeordnet, so daß sie bei Bedarf sofort zur Verfügung stehen. Eine Trennung einzelner Bestandteile der Spanneinrichtung 8 vom Funktionselement 5 während dessen Montage oder Demontage am bzw. vom Tragteil 1 ist mithin nicht erforderlich.

Das Betätigungselement 12 ist als Drehteil ausgebildet, das bezüglich des Grundkörpers 13 drehbar an dessen Oberseite angeordnet ist. Die Drehachse 15 verläuft zweckmäßigerweise parallel zur Hochachse des Funktionselementes 5 und in Montagestellung gesehen rechtwinkelig zur Montagefläche 2. Das Betätigungselement 12 hat vorzugsweise eine scheibenförmige Gestalt, deren Längsachse mit der Drehachse 15 zusammenfällt. An seiner Oberseite können mehrere in Umfangsrichtung verteilt angeordnete Handhabungserhebungen 16 vorgesehen sein, die durch Zwischenräume voneinander getrennt sind. Sie eignen sich bestens für den Angriff der menschlichen Hand, um eine Drehung hervorzurufen. Die Zwischenräume ermöglichen das Ansetzen eines insbesondere stabförmigen Hebels, wenn hohe Drehmomente erforderlich sind.

Als weiterer Bestandteil der Spanneinrichtung 8 ist ein Spannelement 17 vorgesehen. Es befindet sich im Bereich der Unterseite des Grundkörpers 13 und steht mit dem Betätigungselement 12 in Gewindeverbindung. An seinem nach unten ragenden Ende ist ein Spannkopf 18 vorgesehen, der bei einer durch die Gewindeverbindung ermöglichten relativen Verdrehung zwischen dem Betätigungselement 12 und dem Spannelement 17 in Höhenrichtung verlagert wird, so daß sich der Abstand zwischen ihm und dem Grundkörper 13 verändert. Das Betätigungselement 12 ist bezüglich des Grundkörpers 13 in Höhenrichtung unverstellbar.

Das Spannelement 17 besitzt einen vorzugsweise schaftförmigen ersten Gewindeabschnitt 22, der nach oben ragt und mit einem am Betätigungselement 12 vorgesehenen zweiten Gewindeabschnitt 23 in Eingriff steht. Beispielsgemäß ist der zweite Gewindeabschnitt 23 ein Innengewinde, in das der als Außengewinde ausgebildete erste Gewindeabschnitt 22 eingeschraubt ist, wobei die gemeinsame Längsachse 24 der. Gewindeabschnitte 22, 23, mit der Drehachse 15 des Betätigungselements 12 zusammenfällt. Die Verbindung zwischen dem Betätigungselement 12 und dem Spannelement 17 wird durch eine koaxial angeordnete Durchbrechung 25 des Grundkörpers 13 ermöglicht.

In der am Tragteil 1 festgelegten Montagestellung des Funktionselements 5 ist der Spannkopf 18 in der zugeordneten Befestigungsvertiefung 3 verankert. Deren der Montagefläche 2 zugewandte Längsöffnung ist von einem Halsabschnitt 26 gebildet, der in Querrichtung 27 schmäler ist als ein sich in Höhen- und Tiefenrichtung 28 zum Nutgrund hin anschließender und tiefer als der Halsabschnitt 26 liegender Befestigungsabschnitt 32. Auf diese Weise liegt im Übergangsbereich zwischen dem Halsabschnitt 26 und dem Befestigungsabschnitt 32 mindestens ein Haltevorsprung 33 vor, wobei es sich beim Ausführungsbeispiel wegen der symmetrischen Anordnung von Halsabschnitt 26 und Befestigungsabschnitt 32 um zwei solche Haltevorsprünge 32 handelt, die im Bereich der beiden Vertiefungsflanken liegen und sich ununterbrochen über die gesamte Länge der jeweiligen Befestigungsvertiefung 3 erstrecken.

Der Spannkopf 18 ist so gestaltet, daß er in einer bestimmten, in Figur 2 gezeigten Drehstellung - nachfolgend als Freigabestellung bezeichnet - rechtwinkelig zur Montagefläche 2 und damit in Höhen- und Tiefenrichtung 28 in eine jeweilige Befestigungsvertiefung 3 einführbar oder aus dieser herausnehmbar ist. Im in eine Befestigungsvertiefung 3 eingeführten Zustand läßt sich das Spannelement 17 so um seine Längsachse 24 verdrehen, daß der Spannkopf 18 eine in Figur 3 gezeigte Sperrstellung einnimmt, in der er wenigstens einen und vorzugsweise beide Haltevorsprünge 33 an der dem Vertiefungsgrund zugewandten Seite hintergreift. In dieser Position ist ein Herausnehmen des Spannkopfes 8 aus der Befestigungsvertiefung 3 in Höhen- und Tiefenrichtung 28 wegen des formschlüssigen Zusammenarbeitens mit den Haltevorsprüngen 33 ausgeschlossen.

Um eine entsprechende Handhabung zu ermöglichen, besitzt der Spannkopf 18 beispielsgemäß eine Querausdehnung, die geringer ist als die Vertiefungsbreite im Halsabschnitt 26, so daß der Spannkopf 18 in der Freigabestellung durch den Halsabschnitt 26 hindurchpaßt. Im rechten Winkel zur Querausdehnung erstreckt sich mindestens ein Verankerungsvorsprung 34 des Spannkopfes 8, der radial bezüglich der Längsachse 24 ausgerichtet ist. In der Freigabestellung weist der Verankerungsvorsprung 34 in Längsrichtung 35 der zugeordneten Befestigungsvertiefung 3. Der Spannkopf 18 des Ausführungsbeispiels besitzt zwei solche Verankerungsvorsprünge 34, die einander bezüglich der Längsachse 24 diametral gegenüberliegen. In der Sperrstellung gemäß Figur 3 kommen die Verankerungsvorsprünge 34 unterhalb jeweils eines der Haltevorsprünge 33 zu liegen. Der sich an den Spannkopf 18 nach oben hin anschließende, den ersten Gewindeabschnitt 22 bildende Bereich des Spannelementes 17 ist zumindest entlang einer der in Höhen- und Tiefenrichtung 28 gemessenen Dicke der Haltevorsprünge 33 gemessene Länge und vorzugsweise über seine gesamte Länge so schmal ausgebildet, daß er problemlos durch den Halsabschnitt 26 hindurchpaßt.

Es bietet sich an, als Spannelement 17 eine im Handel erhältliche genormte sogenannte Hammerschraube zu verwenden, deren Kopf den Spannkopf 18 und deren Schaft den ersten Gewindeabschnitt 22 bildet. Dies trifft für das Ausführungsbeispiel zu.

Der Gewindeeingriff zwischen dem Spannelement 17 und dem Betätigungselement 12 ist beim Ausführungsbeispiel so gewählt, daß eine direkte Drehmitnahme zwischen den beiden Teilen gewährleistet ist, solange das Spannelement 17 nicht durch Fremdmittel an einer Drehbewegung gehindert wird. Erreicht wird dies durch eine ausreichend hohe Gewindereibung im Bereich der in Eingriff stehenden Gewindeabschnitte 22, 23. Um dies zu verwirklichen, stehen vielfältige Methoden zur Verfügung, beispielsweise eine unterschiedliche Materialwahl, unterschiedliche Steigungen, unterschiedliche Gewindetiefen usw. Man könnte auch eine geeignete Hemmschicht an mindestens einem der Gewindeabschnitte 22, 23 vorsehen. Vor der Montage des Funktionselementes 5 läßt sich somit durch Verdrehen des Betätigungselementes 12 der mitdrehende Spannkopf 18 in die Freigabestellung positionieren. Beim nachfolgenden Ansetzen des Funktionselementes 5 an die Montagefläche 2 taucht der Spannkopf 18 dann ungehindert in den Befestigungsabschnitt 32 der ausgewählten Befestigungsvertiefung 3 ein.

Wird das Betätigungselement 12 anschließend weitergedreht, so verdreht sich auch der Spannkopf 18, bis die Verankerungsvorsprünge 34 unter den Haltevorsprüngen 33 liegen und somit die Sperrstellung gemäß Figur 3 erreicht ist. Ein Weiterdrehen des Spannkopfes 18 über diese Sperrstellung hinaus ist nicht möglich, da am Spannelement 17 mindestens ein Drehbegrenzungsmittel 36 angeordnet ist, das den Spannkopf 18 im Zusammenwirken mit dem Tragteil 1 in der Sperrstellung gegen ein Weiterdrehen blockiert.

Beispielsgemäß arbeitet das Drehbegrenzungsmittel 36 mit der Vertiefungsflanke im Halsabschnitt 26 zusammen. Es ist als nach radial außen ragender Vorsprung des Spannelements ausgebildet, der in der Freigabestellung im Bereich zwischen den beiden Vertiefungsflanken im Halsabschnitt 26 liegt und bei Erreichen der Sperrstellung auf die Vertiefungsflanke aufläuft. Bevorzugt schließt sich an den Spannkopf 18 zum ersten Gewindeabschnitt 22 hin ein koaxial zur Längsachse 24 angeordneter ringförmiger Bund an, dessen Außendurchmesser etwa der Breite des Halsabschnittes 26 entspricht und der durch mindestens einen Vorsprung verbreitert ist, der ein Drehbegrenzungsmittel 36 bildet. Beim Ausführungsbeispiels sind zwei solcher Drehbegrenzungsmittel 36 einander diametral gegenüberliegend vorgesehen. Hammerschrauben, wie sie beim Ausführungsbeispiel als Spannelement 17 eingesetzt werden, haben regelmäßig bereits einen entsprechend ausgestalteten Ringbund, so daß bei ihrer Verwendung als Spannelement 17 keine besonderen Anpassungsarbeiten erforderlich sind, was die Herstellungskosten niedrig hält.

Der in die Sperrstellung verdrehte Spannkopf 18 nimmt zunächst eine Lösestellung ein, in der seine Verankerungsvorsprünge 34 mit Abstand unterhalb der Haltevorsprünge 33 zu liegen kommen oder selbige nur leicht berühren. Wird nun jedoch das Betätigungselement 12 gleichsinnig weitergedreht - nachfolgend als Drehung im Spannsinne bezeichnet -, so wird die Gewindehemmung überwunden, und der zweite Gewindeabschnitt 23 des Betätigungselements 12 wird relativ zu dem stillstehenden ersten Gewindeabschnitt 22 des Spannelements 17 verdreht. Dies führt dazu, daß der Spannkopf 18 in Richtung der Längsachse 24 auf das Betätigungselement 12 zu bewegt wird, da sich der erste Gewindeabschnitt 22 in den zweiten Gewindeabschnitt 23 hineinschraubt. Hierbei verlagert sich der Spannkopf 18 mit den Haltevorsprüngen 33 nach oben in Richtung zu den Haltevorsprüngen 33 und wird gegen diese angedrückt, wobei gleichzeitig der Grundkörper 13 gegen die Montagefläche 2 gespannt wird. Entsprechend dem auf das Betätigungselement 12 ausgeübten Drehmoment stellt sich eine mehr oder weniger große Spannkraft ein. Im Vergleich zur Lösestellung hat sich die Drehposition des Spannkopfes 18 nicht mehr verändert, er nimmt jetzt lediglich eine gegen die Haltevorsprünge 33 vorgespannte Spannstellung ein.

Das Funktionselement 5 ist nun sicher auf das Tragteil 1 aufgespannt und wird selbst dann zuverlässig gehalten, wenn eine dynamische Beanspruchung auf es einwirkt.

Zur Demontage des Funktionselementes 5 wird das Betätigungselement 12 entgegen dem Spannsinne im Lösesinne zurückgedreht, so daß der Spannkopf 18 in Richtung der Längsachse 24 in die Lösestellung verlagert wird. Ein Mitdrehen des Spannkopfes 18 wird bei diesem Vorgang durch den anfänglichen Kraftschluß zwischen dem Spannkopf 18 und den Haltevorsprüngen 33 verhindert. Auch ein zusätzlicher Formschluß kann hier wirksam sein, indem die den Haltevorsprüngen 33 zugewandte Oberseite der Verankerungsvorsprünge 34 mit einer oder mehreren Erhebungen ausgestattet sind, die in der Spannstellung in die Haltevorsprünge 33 eingedrückt wurden. Sobald die Gewindehemmung zwischen den beiden Gewindeabschnitten 22, 23 jedoch größer ist als die zwischen den Verankerungsvorsprüngen 34 und den Haltevorsprüngen 33 wirkenden Haltekraft, dreht sich der Spannkopf 18 zusammen mit dem Betätigungselement 12 zurück. Sobald die Freigabestellung wieder erreicht ist, läßt sich das Funktionselement 5 vom Tragteil 1 abnehmen. Es ist zweckmäßig, wenn auch ein Drehbegrenzungsmittel 36 vorgesehen ist, das ein Weiterdrehen des Spannkopfes 18 aus der Sperrstellung über die Freigabestellung hinaus verhindert. Die Handhabung wird dadurch nochmals erleichtert.

Das Funktionselement 5 des Ausführungsbeispiels ist, um eine exakte Ausrichtung bezüglich des Tragteils 1 zu ermöglichen, mit zwei Zentrierelementen 37 versehen, die in der Montagestellung in die zugeordnete Befestigungsvertiefung 3 hineinragen.

Sie befinden sich an der Unterseite des Grundkörpers 13, ausgehend von dem sie nach unten vorstehen. Bezogen auf die Längsachse 24 liegen sie radial außerhalb des Spannelements 17, wobei eine sie verbindende Linie die Längsachse 24 trifft. Auf diese Weise stellt sich eine bezüglich der Längsachse 24 diametral fluchtende Anordnung der Zentrierelemente 37 und des Spannkopfes 18 ein. Es ist mithin gewährleistet, daß alle diese Teile in der Montagestellung gleichzeitig in die gleiche Befestigungsvertiefung 3 eintauchen können.

Die Querabmessungen der Zentrierelemente 37 entsprechen in etwa der Breite des Halsabschnittes 26, so daß sie in diesem in Querrichtung 27 mit möglichst geringem Spiel oder gar spielfrei aufgenommen werden.

Grundsätzlich würde ein einziges Zentrierelement 37 genügen. Vor allem bei größeren Funktionselementen 5 empfiehlt sich jedoch eine Mehrfachanordnung, wobei mindestens zwei Zentrierelemente 37 so angeordnet sein sollten, daß der Spannkopf 18 zwischen Ihnen liegt. Beim Ausführungsbeispiel ist dies der Fall. Dort besteht zudem die Möglichkeit, die Position der Zentrierelemente 37 bezüglich des Grundkörpers 13 zu variieren, um für die Montagestellung unterschiedliche Ausrichtungen des Funktionselemente 5 vorzugeben.

Beim Ausführungsbeispiel lassen sich die Zentrierelemente 37 in Umfangsrichtung bezüglich der Längsachse 24 verstellen. Sie sind zu diesem Zweck an einer gelochten Drehscheibe 38 angeordnet, die derart drehbar an der Unterseite des Grundkörpers 13 festgelegt ist, daß ihre Längsachse mit der Längsachse 24 zusammenfällt. Das zentrale Loch 39 erlaubt den Durchgriff des Spannelements 17. Die Zentrierelemente 37 sind einander diametral gegenüberliegend nach unten ragend insbesondere einstückig an der Drehscheibe 38 befestigt. Durch Verdrehen läßt sich die Ausrichtung bezüglich des Grundkörpers 13 verändern.

Von Vorteil ist es, wenn sich mindestens zwei Drehstellungen der Drehscheibe 38 bezüglich des Grundkörpers 13 lösbar arretieren lassen. Beim Ausführungsbeispiel besteht die Wahlmöglichkeit zwischen einer in Figur 2 gezeigten Längs stellung und einer diesbezüglich um 90° verdrehten Querstellung. In der Längsstellung liegen die Zentrierelemente 37 in einer Flucht mit einer längsausgerichteten Achse des Funktionselements 5, in der Querstellung hingegen in einer Flucht mit einer Querachse. Als Arretiermittel kann beispielsweise ein federnd vorgespannter Indexkörper 40 vorgesehen sein, der an der Drehscheibe 38 mitdrehbar festgelegt ist, und wobei am Grundkörper 13 in der Bewegungsbahn des Indexkörpers 40 Indexvertiefungen 43 ausgebildet sind, in die der Indexkörper 40 in den betreffenden Drehstellungen der Drehscheibe 38 federnd eingedrückt wird. Natürlich kann der Indexkörper auch am Grundkörper 13 angeordnet sein, wobei sich die Indexvertiefungen 43 an der Drehscheibe 38 befinden.

Beim Ausführungsbeispiel ist die Drehscheibe 38 besonders einfach am Grundkörper 13 gehalten. Als Haltemittel dient nämlich das Betätigungselement 12, das mit nach unten ragenden Haltearmen 44 ausgestattet ist, die die Durchbrechungen 25 im Randbereich nach unten hin durchsetzen. Diese Haltearme 44 greifen außerdem noch in das Loch 39 der Drehscheibe 38 ein und hintergreifen den Lochrand an der Unterseite mit nach radial außen ragenden Haltenasen 45. Zweckmäßigerweise liegt zwischen den Haltenasen 45 und der Drehscheibe 38 eine Rastverbindung vor. Die Arretiereinrichtung der Drehscheibe 38 und die Haltearme 44 sind so aufeinander abgestimmt, daß sich das Betätigungselement 12 ungehindert verdrehen läßt, ohne die Drehscheibe 38 mitzunehmen. Die Funktionen des Betätigungselements 12 und der Drehscheibe 38 sind also völlig unabhängig voneinander.

Der Figur 3 ist zu entnehmen, daß die Drehscheibe 38 bevorzugt versenkt an einer nach unten offenen Ausnehmung 46 des Grundkörpers 13 zu liegen kommt, so daß lediglich die Zentrierelemente 37 nach unten vorstehen.

Es ist durchaus möglich, ein Funktionselement 5 mit mehreren Spanneinrichtungen der bisher beschriebenen Art auszustatten, die unabhängig voneinander arbeiten. Zweckmäßig ist dies vor allem dann, wenn infolge der Größe des Funktionselements 5 eine gleichzeitige Verankerung in mehreren Befestigungsvertiefungen 3 sinnvoll ist. Insbesondere bei relativ langen Funktionselementen 5 kann auch vorgesehen sein, mehrere Spanneinrichtungen in Längsrichtung 35 beabstandet aufeinanderfolgend vorzusehen.

## Patentansprüche

1. Für Demonstrations- und/oder Schulungszwecke verwendbares Funktionselement (5), das lösbar an der Montagefläche eines mindestens eine nutartige Befestigunsvertiefung (3) aufweisenden Tragteils (1) festgelegt ist und zu diesem Zweck eine mit dem Tragteil (1) in Eingriff bringbare Spanneinrichtung (8) aufweist, die durch Drehen eines Betätigungselements (12) aktivierbar ist, und die ein mit dem Betätigungselement (12) in Gewindeverbindung stehendes Spannelement (17) aufweist, das über einen nach unten ragenden Spannkopf (18) verfügt, der bei Einnahme seiner Freigabestellung im wesentlichen rechtwinkelig zur Montagefläche (2) in eine Befestigungsvertiefung (3) des Tragteils (1) einführbar und aus dieser entnehmbar ist, und der im in die Befestigungsvertiefung (3) eingeführten Zustand zwischen der Freigabestellung und einer Sperrstellung verdrehbar ist, wobei er in der Sperrstellung mindestens einen Haltevorsprung (33) der Befestigungsvertiefung (3) hintergreift, so daß sein besagtes Entnehmen aus der Befestigungsvertiefung (3) durch Formschluß verhindert wird, und wobei mindestens ein Drehbegrenzungsmittel (36) vorhanden ist, das ein Verdrehen des in die Befestigungsvertiefung (3) eingeführten Spannkopfes (18) ausgehend von der Freigabestellung über die Sperrstellung hinaus verhindert, dadurch gekennzeichnet, daß der Spannkopf (18) durch relativ zu ihm erfolgendes Verdrehen des Betätigungselementes (12) unter Vermittlung der Gewindeverbindung (22,23) in Höhen- und Tiefenrichtung (28) der zugeordneten Befestigungsvertiefung (3) hin und her verstellbar ist, so daß er in der Sperrstellung zwischen einer gegen den Haltevorsprung (33) vorgespanntes Spannstellung und einer bezüglich dieser weniger stark vorgespannten oder vom Haltevorsprung (33) entfernten Lösestellung bewegbar ist, daß die Gewindeverbindung zwischen dem Betätigungselement (12) und dem Spannelement (17) derart ausgebildet ist, daß der in Freigabestellung in einer Befestigungsvertiefung (3) angeordnete Spannkopf (18) beim im Spannsinne erfolgenden Verdrehen des Betätigungselementes (12) zunächst bis zur Sperrstellung mitgenommen wird, wo das Drehbegrenzungsmittel wirksam wird, so daß er beim anschließenden Weiterdrehen des Betätigungselementes (12) unter Beihaltung der Sperrstellung aus der Lösestellung in die Spannstellung verbracht wird, und daß das Funktionselement (5) mindestens ein zur Positionierung in der an das Tragteil angesetzten Montagestellung dienendes Zentrierelement (37) aufweist, das bei Einnahme der Montagestellung in diejenige Befestigungsvertiefung (3) eintaucht, in die auch das zugeordnete Spannelement (17) eingreift, und das mit den beiden Vertiefungsflanken der Befestigungsvertiefung (3) zur Querabstützung zusammenarbeiten kann.

2. Funktionselement nach Anspruch 1, dadurch gekennzeichnet, daß sich der Spannkopf (18) bei ausgehend von der Spannstellung im Lösesinne erfolgendem Verdrehen des Betätigungselements (12) zunächst unter Beibehaltung der Sperrstellung in die Lösestellung bewegt und sich beim anschließenden Weiterdrehen des Betätigungselements zusammen mit diesem in die Freigabestellung dreht.

3. Funktionselement nach Anspruch 1 oder 2, dadurch gekennzeichnet, daß die Drehmitnahme zwischen Betätigungselement (12) und Spannelement (17) durch Maßnahmen zur Hemmung der relativen Drehbewegung hervorgerufen wird, und zwar durch eine entsprechend bemessene Gewindereibung und/oder -steigung der miteinander in Eingriff stehenden Gewindeabschnitte (22,23).

4. Funktionselement nach einem der Ansprüche 1 bis 3, dadurch gekennzeichnet, daß das Drehbegrenzungsmittel (36) am Spannelement (17) und insbesondere an dessen Spannkopf (18) angeordnet ist.

5. Funktionselement nach Anspruch 4, dadurch gekennzeichnet, daß das Drehbegrenzungsmittel (36) ein ausgehend von der Drehachse (15,24) nach radial außen ragender Vorsprung des Spannelements (17) ist, der im in die Befestigungsvertiefung (3) eingeführten Zustand des Spannelements (17) insbesondere mit der Flanke eines im Vergleich zu tiefer liegenden Bereichen schmäleren Halsabschnittes (26) der Befestigungsvertiefung (3) zusammenarbeiten kann.

6. Funktionselement nach Anspruch 5, dadurch gekennzeichnet, daß das Spannelement (17) eine sogenannte Hammerschraube ist, deren Kopf den Spannkopf (18) und deren an den Kopf angeformter Bund das Drehbegrenzungsmittel (36) bildet.

7. Funktionselement nach einem der Ansprüche 1 bis 6, dadurch gekennzeichnet, daß das Betätigungselement (12) ein insbesondere scheibenförmiges, an einem Grundkörper (13) des Funktionselements drehgelagertes Drehteil ist und über einen zweiten Gewindeabschnitt (23) verfügt, der mit einem ersten Gewindeabschnitt (22) des Spannelements (17) in Eingriff steht.

8. Funktionselement nach einem der Ansprüche 1 bis 7, dadurch gekennzeichnet, daß das mindestens eine Zentrierelement (37) an der Unterseite eines Grundkörpers (13) des Funktionselementes (5) radial außerhalb der Drehachse (24) des Spannelements (17) angeordnet und insbesondere in Umfangsrichtung dieser Drehachse (24) bezüglich des Grundkörpers (13) verstellbar ist.

9. Funktionselement nach Anspruch 8, dadurch gekennzeichnet, daß das mindestens eine Zentrierelement (37) in mindestens zwei Stellungen bezüglich des Grundkörpers (13) lösbar arretierbar ist, wobei es zweckmäßigerweise in einer Längsstellung in einer Flucht mit einer die Drehachse (24) treffenden Längsachse und in einer Querstellung in einer Flucht mit einer die Drehachse (24) treffenden Querachse des Funktionselements (5) ausgerichtet ist.

10. Funktionselement nach einem der Ansprüche 1 bis 9, dadurch gekennzeichnet, daß das mindestens eine Zentrierelement (37) an einer gelochten Drehscheibe (38) sitzt, die an der Unterseite des Funktionselementes (5) drehbar angeordnet und zentral vom Spannelement (17) und/oder vom Betätigungselement (12) durchsetzt ist.

11. Funktionselement nach Anspruch 10, dadurch gekennzeichnet, daß die Drehscheibe von dem an der Oberseite des Funktionselements (5) angeordneten Betätigungselement (12) gehalten wird, und zwar insbesondere mittels rastbarer Haltearme (44), die durch eine Durchbrechung (25) eines Grundkörpers (13) des Funktionselements (5) hindurchragen.

12. Funktionselement nach einem der Ansprüche 1 bis 11, dadurch gekennzeichnet, daß am drehbaren Betätigungselement (12) durch Zwischenräume voneinander getrennte Handhabungserhebungen (16) zum manuellen Erfassen vorgesehen sind, wobei die Zwischenräume das Ansetzen eines inbesondere stabförmigen Hebels ermöglichen, um das Festziehen oder Lösen der Spannstellung zu unterstützen.

13. Funktionselement nach einem der Ansprüche 1 bis 12, dadurch gekennzeichnet, daß das Tragteil (1) mehrere parallel und im Abstand nebeneinander verlaufende Befestigungsvertiefungen (3) aufweist, die zur Montagefläche (2) hin offen sind, und die zweckmäßigerweise in dem sich an die Montagefläche (2) anschließenden Bereich einen im Vergleich zu tiefer liegenden Bereichen (32) schmäleren Halsabschnitt (26) aufweisen.

14. Funktionselement nach einem der Ansprüche 1 bis 13, dadurch gekennzeichnet, daß es eine Funktionseinheit (7) insbesondere pneumatischer und/oder hydraulischer und/oder elektrischer und/oder elektronischer und/oder optischer Art trägt.

## Claims

1. Functional element (5) for use in demonstration and/or training applications, which is detachably located on the mounting surface of a supporting part (1) provided with a groove-type mounting recess (3) and which, for this purpose, is fitted with a clamping device (8) capable of engagement with the supporting part (1), said clamping device (8) being activated by turning an operating element (12) and having a clamping element (17) in threaded engagement with said operating element (12) and provided with a clamping head (18) extending downwards, which, in its release position, can be inserted into and removed from a mounting recess (3) of the supporting part (1) at a substantially right angle to the mounting surface (2) and which, when inserted into the mounting recess (3), can be rotated between its release position and a locking position, engaging at least one retaining projection (33) of the mounting recess (3) from behind in the locking position, so that its removal from the mounting recess (3) is prevented by positive locking, at least one rotation stop (36) being provided to prevent the rotation of the clamping head (18) inserted into the mounting recess (3) from the release position beyond the locking position, characterized in that the clamping head (18) can be adjusted in the vertical direction (28) of the associated mounting recess (3) by rotating the operating element (12) relative to the clamping head by means of the threaded engagement (22, 23), thus being movable in the locking position between a clamping position in which it is biassed towards the retaining projection (33) and an unclamped position in which it is less strongly biassed or removed from the retaining projection (33), in that the threaded engagement between the operating element (12) and the clamping element (17) is so designed that the clamping head (18) located in a mounting recess (3) in the release position is, on rotating the operating element (12) in clamping direction, first driven as far as the locking position, where the rotation stop becomes effective, so that the further rotation of the operating element (12) results in a movement from the unclamped position into the clamping position while maintaining the locking position, and in that the functional element (5) is provided with at least one centring element (37) for positioning in the installed position on the supporting part, said centring element (37), on adopting the installed position, dipping into the same mounting recess (3) as the associated clamping element (17) and being capable of acting in combination with the two sides of the mounting recess (3) to provide lateral support.

2. Functional element according to Claim 1, characterized in that the clamping head (18), when the operating element (12) is rotated from the clamping position in the direction of unclamping, is first moved into the unclamped position while maintaining the locking position and then, when the operating element is rotated further, into the release position together with the latter.

3. Functional element according to Claim 1 or 2, characterized in that the co-rotation of the operating element (12) and the clamping element (17) is achieved by measures to inhibit their relative rotation, i.e. suitable thread friction and/or pitch of the threaded sections in engagement with each other.

4. Functional element according to any of Claims 1 to 3, characterized in that the rotation stop (36) is located on the clamping element (17), in particular on its clamping head (18).

5. Functional element according to Claim 4, characterized in that the rotation stop (36) is a radial projection of the clamping element (17) extending radially outwards from the axis of rotation (15, 24) and capable of acting together in particular with the side of a neck section (26) of the mounting recess (3) which is narrower than its lower areas, when the clamping element (17) is installed in the mounting recess (3).

6. Functional element according to Claim 5, characterized in that the clamping element (18) is a so-called hammer head bolt, its head forming the clamping head (18) and its collar, which is integral with the head, forming the rotation stop (36).

7. Functional element according to any of Claims 1 to 6, characterized in that the operating element (12) is an in particular disc-shaped rotary part rotatably mounted on a base (13) of the functional element and has a second threaded section (23) in engagement with a first threaded section (22) of the clamping element (17)

8. Functional element according to any of Claims 1 to 7, characterized in that at least one centring element (37) is located on the underside of a base (13) of the functional element (5) radially outside the axis of rotation (24) of the clamping element (17) and is, in particular in the circumferential direction of the axis of rotation (24), adjustable relative to the base (13).

9. Functional element according to Claim 8, characterized in that the centring element(s) (37) is (are) releasably lockable in at least two positions relative to the base (13), being expediently in alignment with a longitudinal axis meeting the axis of rotation (24) in a longitudinal position and in alignment with a transverse axis of the functional element (5) meeting the axis of rotation (24) in a transverse position.

10. Functional element according to any of Claims 1 to 9, characterized in that the centring element(s) (37) is (are) mounted on a perforated rotary disc (38) rotatably mounted on the underside of the functional element (5) and centrally surrounding the clamping element (17) and/or the operating element (12).

11. Functional element according to Claim 10, characterized in that the rotary disc is held by the operating element (12) located on top of the functional element (5), this being achieved in particular by means of latching retaining arms (44) projecting through an opening (25) of a base (13) of the functional element (5).

12. Functional element according to any of Claims 1 to 11, characterized in that the rotatable operating element (12) is provided with handling projections (12) separated by gaps for manual handling, the gaps enabling an in particular rod-shaped lever to be attached for tightening or loosening of the clamping position.

13. Functional element according to any of Claims 1 to 12, characterized in that the supporting part (1) has several mounting recesses (3) arranged parallel to and at a distance from each other, said mounting recesses (3) being open towards the mounting surface (2) and expediently having a neck section (26) narrower than the lower lying areas (32) adjacent to the mounting surface (2).

14. Functional element according to any of Claims 1 to 13, characterized in that it carries a functional unit (7), in particular of a pneumatic and/or hydraulic and/or electrical and/or optical kind.

## Revendications

1. Élément fonctionnel (5) utilisable à des fins de démonstration ou d'enseignement, qui est fixé de manière amovible sur la surface de montage d'une partie formant support (1) présentant au moins un renfoncement de fixation (3) de type rainure, et qui présente à cet effet un dispositif de blocage (8) pouvant se mettre en prise avec la partie formant support (1) et qui peut être activé par rotation d'un élément de manoeuvre (12), et qui présente un élément de serrage (17) en liaison filetée avec l'élément de manoeuvre (12) et présentant une tête de serrage (18) en saillie vers le bas qui, lorsqu'elle prend sa position de libération, peut être introduite sensiblement perpendiculairement à la surface de montage (2) dans un renfoncement de fixation (3) de la partie formant support (1) et peut être extraite de celui-ci, et qui, à l'état introduit dans le renfoncement de fixation (3), peut être tournée entre la position de libération et une position de blocage, en saisissant par dessous, dans la position de blocage, au moins une saillie d'arrêt (33) du renfoncement de fixation (3), de sorte que son retrait depuis le renfoncement de fixation (3) est empêché par engagement positif, et au moins un moyen de limitation de rotation (36) étant prévu, qui empêche une rotation de la tête de serrage (18), introduite dans la renfoncement de fixation (3), au-delà de la position de blocage en partant de la position de libération, caractérisé en ce que la tête de serrage (18) est réglable en va-et-vient dans la direction de la hauteur et de la profondeur du renfoncement de fixation associé (3), par rotation par rapport à elle de l'élément de manoeuvre (12) et par l'intermédiaire de la liaison filetée (22, 23), de sorte qu'elle est mobile dans la position de blocage entre une position de serrage précontrainte contre la saillie d'arrêt (33) et une position de dégagement moins fortement précontrainte contre celle-ci ou éloignée de la saillie d'arrêt (33), en ce que la liaison filetée entre l'élément de manoeuvre (12) et l'élément de serrage (17) est conformée de telle sorte que, lors d'une rotation de l'élément de manoeuvre (12) dans la direction de serrage, la tête de serrage (18) placée, dans la position de libération, dans un renfoncement de fixation (3) est d'abord entraînée jusqu'à la position de blocage, où le moyen de limitation de rotation devient actif, de sorte que, lors de la poursuite de la rotation de l'élément de manoeuvre (12), elle est amenée de la position de dégagement à la position de serrage en conservant la position de blocage, et en ce que l'élément fonctionnel (5) présente au moins un élément de centrage (37) servant au positionnement dans la position de montage rapportée sur le partie formant support, élément de centrage qui s'enfonce dans la position de montage dans le renfoncement de fixation (3) dans lequel s'engage également l'élément de serrage (17) associé, et qui peut coopérer avec les deux flancs du renfoncement de fixation (3) à des fins d'appui transversal.

2. Élément fonctionnel selon la revendication 1, caractérisé en ce que la tête de serrage (18), lors d'une rotation de l'élément de manoeuvre (12) dans la direction de dégagement en partant de la position de serrage, se déplace d'abord vers la position de dégagement en conservant la position de blocage et, lors d'une rotation supplémentaire de l'élément de manoeuvre, tourne avec celui-ci jusqu'à la position de libération.

3. Élément fonctionnel selon la revendication 1 ou 2, caractérisé en ce que l'entraînement en rotation entre l'élément de manoeuvre (12) et l'élément de serrage (17) est provoqué par des moyens visant à empêcher un mouvement relatif de rotation, à savoir par un frottement de filetages de valeur appropriée et/ou par une pente de filetage de valeur appropriée des sections de filetages (22, 23) en prise mutuelle.

4. Élément fonctionnel selon l'une des revendications 1 à 3, caractérisé en ce que le moyen de limitation de rotation (36) est placé sur l'élément de serrage (17), et en particulier sur sa tête de serrage (18).

5. Élément fonctionnel selon la revendication 4, caractérisé en ce que le moyen de limitation de rotation (36) est une saillie radiale vers l'extérieur de l'élément de serrage (17), partant de l'axe de rotation (15, 24), saillie qui, une fois l'élément de serrage (17) introduit dans le renfoncement de fixation (3), peut coopérer en particulier avec le flanc d'une section de col (26) du renfoncement de fixation (3) plus étroite que des zones situées plus en profondeur.

6. Élément fonctionnel selon la revendication 5, caractérisé en ce que l'élément de serrage (17) est ce qu'on appelle une vis à tête rectangulaire, dont la tête forme la tête de serrage (18) et dont la collerette formée sur la tête forme le moyen de limitation de rotation (36).

7. Élément fonctionnel selon l'une des revendications 1 à 6, caractérisé en ce que l'élément de manoeuvre (12) est une pièce tournée, en particulier en forme de rondelle, montée tournante sur un corps de base (13) de l'élément fonctionnel (5), et présente une deuxième section filetée (23) qui est en prise avec une première section filetée (22) de l'élément de serrage (17).

8. Élément fonctionnel selon l'une des revendications 1 à 7, caractérisé en ce qu'au moins un élément de centrage (37) est placé sur le dessous d'un corps de base (13) de l'élément fonctionnel (5), à l'extérieur dans le sens radial par rapport à l'axe de rotation (24) de l'élément de serrage (17), et est réglable en particulier dans la direction de la circonférence de cet axe de rotation (24) par rapport au corps de base (13).

9. Élément fonctionnel selon la revendication 8, caractérisé en ce qu'au moins un élément de centrage (37) est verrouillable de manière amovible dans au moins deux positions par rapport au corps de base (13), cet élément étant orienté, de manière avantageuse, dans une position longitudinale, en alignement avec un axe longitudinal coupant l'axe de rotation (24) et, dans une position transversale, en alignement avec un axe transversal de l'élément fonctionnel (5) coupant l'axe de rotation (24).

10. Élément fonctionnel selon l'une des revendications 1 à 9, caractérisé en ce qu'au moins un élément de centrage (37) est placé sur une rondelle rotative perforée (38), qui est montée rotative sur le dessous de l'élément fonctionnel (5) et est traversée en son centre par l'élément de serrage (17) et/ou l'élément de manoeuvre (12).

11. Élément fonctionnel selon la revendication 10, caractérisé en ce que la rondelle rotative est maintenue par l'élément de manoeuvre (12) placé sur le dessus de l'élément fonctionnel (5), à savoir en particulier au moyen de bras de maintien encliquetables (44), qui font saillie à travers une ouverture (25) d'un corps de base (13) de l'élément fonctionnel (5).

12. Élément fonctionnel selon l'une des revendications 1 à 11, caractérisé en ce que des protubérances de maniement (16) séparées les unes des autres par des interstices sont prévues sur l'élément de manoeuvre rotatif (12) pour être saisies manuellement, les interstices permettant la mise en place d'un levier en particulier en forme de tige, pour faciliter le serrage ou le dégagement de la position de serrage.

13. Élément fonctionnel selon l'une des revendications 1 à 12, caractérisé en ce que la partie formant support (1) présente plusieurs renfoncements de fixation (3) parallèles et distants les uns des autres, qui sont ouverts en direction de la surface de montage, et qui, de manière avantageuse, présentent dans la zone contiguë à la surface de montage (2) une section en col (26) plus étroite que les zones (32) situées plus en profondeur.

14. Élément fonctionnel selon l'une des revendications 1 à 13, caractérisé en ce qu'il porte une unité fonctionnelle (7), en particulier de type pneumatique et/ou hydraulique et/ou électrique et/ou électronique et/ou optique.
